# EUROPEAN PATENT APPLICATION

(11) **EP 4 682 707 A1**
(43) Date of publication of application: **21.01.2026**
(21) Application number: 24770379.6
(22) Date of filing: 16.02.2024
(51) Int. Cl.: G06F 8/30, G05B 19/042

(54) **CONTROL PROGRAM TRIAL MANAGEMENT SYSTEM, TRIAL MANAGEMENT METHOD AND TRIAL MANAGEMENT PROGRAM**

(30) Priority: 14.03.2023 JP 2023039845
(71) Applicant: OMRON Corporation, Kyoto 600-8530 (JP)
(72) Inventor: SHIMAMURA, Tomonori, Kyoto-shi, Kyoto 600-8530 (JP); UEKI, Takuya, Kyoto-shi, Kyoto 600-8530 (JP); TAHARA, Yutaka, Kyoto-shi, Kyoto 600-8530 (JP)
(74) Representative: Appelt, Christian W.
(86) International application number: PCT/JP2024/005459
(87) International publication number: WO 2024/190264

(57) **Abstract**

Provided is a control program trial management system for shortening a development period of a control program for comprehensively controlling a plurality of control devices in FA. A trial management system according to the present disclosure includes: a virtual execution unit configured to cause a simulation program to virtually execute a control program created by a control designer; a step execution unit configured to execute the control program for an individual step preset to cause a control device to actually operate when an execution result of the virtual execution unit satisfies a criterion preset; a presentation unit configured to generate a time chart representing an operation progress in the individual step and present the time chart to an on-site worker; a reception unit configured to receive an evaluation of the time chart by the on-site worker; and an update unit configured to update, based on the evaluation accepted by the reception unit, the criterion.

## Description

This application is the U.S. national stage application under 35 U.S.C. §371 of International Application No. PCT/JP2024/005459, filed on February 16, 2024, which claims the benefit of and priority to Japanese Patent Application 2023-039845, filed on March 14, 2023, the entire contents of which are incorporated herein by reference.

### TECHNICAL FIELD

The present invention relates to a control program trial management system, a trial management method, and a trial management program.

### BACKGROUND OF INVENTION

In program development, many techniques to quickly identify a defect in a program code have been proposed. For example, Patent Document 1 sets a point in each of an old program having no errors and a developed new program and alternatively executes a procedure between the old program and the new program, thus identifying a position where a defect occurs.

### CITATION LIST

### PATENT LITERATURE

Patent Document 1: JP 2022-89180 A

### SUMMARY

### TECHNICAL PROBLEM

In program development in factory automation (FA), a control program for comprehensively controlling a plurality of control devices, for example, for a robot arm, a component supply device, and a belt conveyor is developed for a manufacturing line of manufacturing a product by using the plurality of control devices. A control designer designs such a control program to the product can be properly manufactured. The designed control program is subjected to a simulation program before actually operating the control devices to determine whether the control program can appropriately operate the control devices. When determined to be inappropriate, the control program is redesigned by the control designer.

When determined to be appropriate by the simulation program, the control program is actually executed on the control devices on a trial basis. An on-site worker, who is responsible for maintenance, inspection, and the like of the control devices, observes such a trial and determines whether or not the process is achieved as expected. When there is a malfunction, the on-site worker makes a report to the control designer, and on receiving such a report, the control designer redesigns the control program. That is, in program development in FA, not only a case of whether or not an error (bug) is included in the control program, but also a case where a control program that causes an operation different from an expected operation at a manufacturing site is determined to be inappropriate even when an error is not included in the program itself.

In the development of control program in the past, exchanges between a control designer and an on-site worker are made several times, which is one reason that makes the development period longer. The same applies to the control program update due to, for example, a layout change of the manufacturing line. Although the on-site worker, who can directly understand a source code of the control program, may quickly modify and update the control program, few on-site workers have such a skill. On the other hand, few control designers are familiar with know-how on, for example, adjustment between control devices at a manufacturing line site. Due to such circumstances, the development period of the control program becomes longer.

The present invention has been made to solve the issue above and aims to provide a control program trial management system and the like for shortening a development period of a control program for comprehensively controlling a plurality of control devices in FA.

### SOLUTION TO PROBLEM

A trial management system according to a first aspect of the present invention includes: a virtual execution unit configured to cause a simulation program to virtually execute a control program created by a control designer; a step execution unit configured to execute the control program for an individual step preset to cause a control device to actually operate when an execution result of the virtual execution unit satisfies a criterion preset; a presentation unit configured to generate a time chart representing an operation progress in the individual step and present the time chart to an on-site worker; a reception unit configured to receive an evaluation of the time chart by the on-site worker; and an update unit configured to update, based on the evaluation received by the reception unit, the criterion.

Such a management system receives an input of the on-site worker by using, the time chart to be easily recognized even by the on-site worker without specialized knowledge of the control program as an evaluation target, the time chart representing the operation progress of a control device, allowing quick and accurate feedback to be easily obtained from an on-site worker. Since such an evaluation fed back is not transferred to the control designer but is used to update the evaluation criterion to be used by the simulation program, the know-how of the site is accumulated in the system rather than the control designer. When the created control program has a malfunction, the control designer can know the malfunction from an execution result of the simulation program and can thus reduce the number of times of trial and error in an actual control device. That is, the development period of the control program can be shortened.

In the above-described trial management system, the reception unit may receive an evaluation as a deformation of a time chart, and the update unit may update, based on the deformed time chart, the criterion for operation timing between elements to be sequentially executed. The configuration above allows the on-site worker to more intuitively input to the system his/her own evaluation of the operation timing between the elements to be sequentially executed.

In the trial management system, the reception unit may receive an evaluation as a deformation of a time chart and the update unit may update, based on the deformed time chart, the criterion for a distance between elements of which at least one moves. The configuration above allows the on-site worker to more intuitively input to the system his/her own evaluation of the distance between the elements of which at least one is moving.

In the trial management system, the reception unit may receive information accompanying the evaluation, the update unit may store the information in a storage unit in association with the criterion to be updated, and the virtual execution unit may read out the information from the storage unit and present the information to the control designer when an execution result of the control program by the simulation program does not satisfy the updated criterion. The configuration above allows the control designer to obtain a suggestion to the cause of the malfunction of the control program created by oneself.

A trial management method according to a second aspect of the present invention includes: a virtual execution process of causing a simulation program to virtually execute a control program created by a control designer; a step execution process of executing the control program for an individual step preset to cause a control device to actually operate when an execution result in the virtual execution process satisfies a criterion preset; a presentation process of generating a time chart representing an operation progress in the individual step and presenting the time chart to an on-site worker; a reception process of receiving an evaluation of the time chart by the on-site worker; and an update process of updating, based on the evaluation received in the reception process, the criterion.

A trial management program according to a third aspect of the present invention causes a computer to execute: a virtual execution process of causing a simulation program to virtually execute a control program created by a control designer; a step execution process of executing the control program for an individual step preset to cause a control device to actually operate when an execution result in the virtual execution process satisfies a criterion preset; a presentation process of generating a time chart representing an operation progress in the individual step and presenting the time chart to an on-site worker; a reception process of receiving an evaluation of the time chart by the on-site worker; and an update process of updating, based on the evaluation received in the reception process, the criterion.

Even the second aspect and the third aspect can shorten the development period of the control program similar to the first aspect.

### ADVANTAGEOUS EFFECTS OF INVENTION

The present invention can provide a control program trial management system and the like for shortening a development period of a control program for comprehensively controlling a plurality of control devices in FA.

### BRIEF DESCRIPTION OF THE DRAWINGS

FIG. 1 is a diagram schematically illustrating a state in which a trial management system according to the present embodiment is used.
FIG. 2 is a hardware configuration diagram of a simulation server.
FIG. 3 is a hardware configuration diagram of a controller.
FIG. 4 is a conceptual diagram illustrating a flow of processing of the trial management system.
FIG. 5 is an example of a display image of a time chart.
FIG. 6 is an example of a designation image for designating an evaluation target.
FIG. 7 is an example of an evaluation input image.
FIG. 8 is another example of the evaluation input image.

### DESCRIPTION OF EMBODIMENTS

Hereinafter, the present invention will be described in the form of embodiments of the invention, but the invention according to the claims is not limited to the following embodiments. Not all of the configurations described in the embodiments are essential to solve the problem.

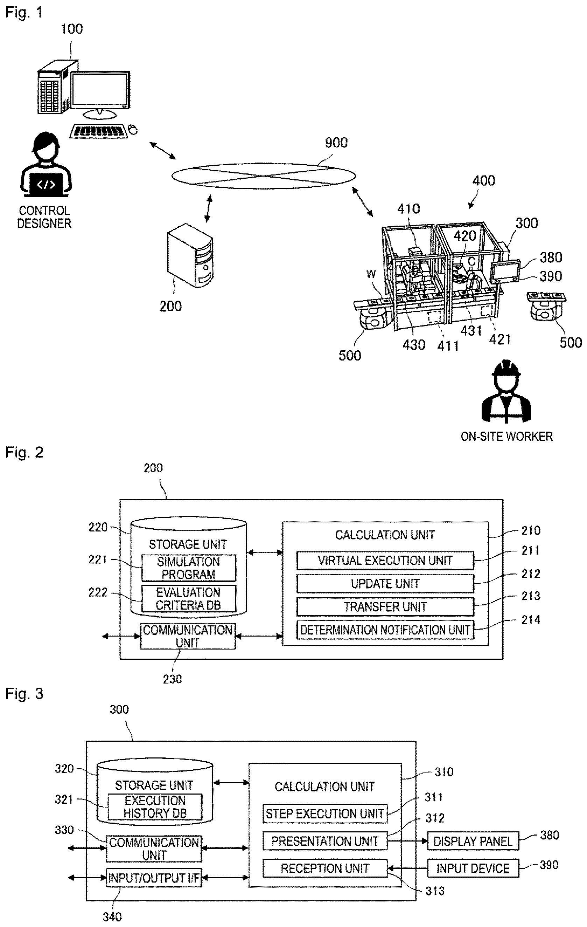

FIG. 1 is a diagram schematically illustrating a state in which a trial management system according to the present embodiment is used. The trial management system according to the present embodiment is mainly configured by a simulation server 200 and a controller 300. The simulation server 200 can virtually execute a control program created with a programming PC 100. The controller 300 can control a control device 400 installed in a manufacturing line for manufacturing a product in a factory, for example, by using the control program created with the programming PC 100. The programming PC 100, the simulation server 200, and the controller 300 are connected to each other via a network 900. The network 900 may be the Internet or an intranet.

The programming PC 100 is a computer used by a control designer to create a control program, and is installed in a program development room, for example. The control program is a program for integrally controlling control devices installed at a site where a product is manufactured and contributes to FA for automating a production process.

The simulation server 200 is a server that executes a simulation program. The simulation server 200 may be installed in a server room or may be installed in a program development room the same as the programming PC 100. The simulation server 200 executes the simulation program to construct a simulation model that virtually reproduces the control device 400 and executes the control program received from the programming PC 100 in the simulation model. The simulation server 200 is one form of an automatic test tool, and as the automatic test tool, there may be adopted software in the loop simulation (SILS) that executes simulation without using hardware as described above. In addition to the SILS, there may be adopted hardware in the loop simulation (HILS) or the like, in which a simulation model and hardware such as the actual controller 300 are combined, and an output signal generated in the hardware is taken into the simulation model to execute a simulation.

The controller 300 is a computer that is attached to the control device 400 for manufacturing a product and executes a control program created by a control designer. The controller 300 is connected, in addition to the control device 400 that is the control target, to a display panel 380 that presents information related to execution of the control program to an on-site worker and an input device 390 that receives an input from the on-site worker. The controller 300 may integrally be configured with the display panel 380 and the input device 390.

The control device 400 is configured by combining various manufacturing devices in accordance with a product to be manufactured. **In** the present embodiment, as an example, a mounting robot 410 for mounting a chip C on a work W, a supply device 420 for supplying the chip C to the mounting robot 410, and a conveyor 430 for conveying the work W are combined. The mounting robot 410 is provided with a control box 411 for directly controlling the operation thereof, and similarly, the supply device 420 is provided with a control box 421, and the conveyor 430 is provided with a control box 431. The controller 300 is connected to the control boxes 411, 421, and 431, and the control program transmits control signals to these boxes, thereby achieving a sequential manufacturing process in which cooperation between apparatuses, such as mounting a chip on a work and carrying out the work, for example, is implemented. **In** the illustrated example, a transport robot 500 supplies the work W before being mounted with the chip C is mounted to the conveyor 430, and the work W on which the chip C is mounted is carried out from the conveyor 430, and the operation of the transport robot 500 may also be a control target of the controller 300.

The on-site worker is responsible for tasks such as maintenance and inspection of the control device 400. As will be described below, in the test trial of the control program, the operation state of the control device 400 is checked and evaluated.

The trial management system according to the present embodiment is achieved mainly by the simulation server 200 and the controller 300 operating in cooperation with each other. The trial management program executed to operate the above in cooperation with each other causes the simulation server 200 to virtually execute the control program or causes the controller 300 to actually execute the control program. Specific processing that the trial management program causes the simulation server 200 and the controller 300 to execute will be described in detail below.

FIG. 2 is a hardware configuration diagram of the simulation server 200. The simulation server 200 is configured mainly by a calculation unit 210, a storage unit 220, and a communication unit 230. The calculation unit 210 is a processor (central processing unit (CPU)) that performs control of the simulation server 200 and execution processing of programs. The processor may have a configuration to cooperate with an arithmetic processing chip such as an application specific integrated circuit (ASIC), a graphics processing unit (GPU), and the like. The calculation unit 210 can read out and execute a simulation program 221 stored in the storage unit 220.

The storage unit 220 is a non-volatile storage medium and is configured by a hard disk drive (HDD), for example. The storage unit 220 stores an evaluation criteria DB 222 in addition to the simulation program 221. The evaluation criteria DB 222 is a database that stores an evaluation criterion for determining whether or not an execution result, which is derived when a control program is virtually executed by using the simulation program 221, is acceptable in the execution of the control program on an actual machine. The evaluation criteria DB may store information related to the evaluation criterion input by the on-site worker as information accompanying the evaluation criterion above.

The storage unit 220 may further store a simulation model of the control device 400, various parameter values, functions, lookup tables, and the like used for control and calculation. The storage unit 220 may be configured by a plurality of pieces of hardware, and for example, a storage medium that stores the simulation program 221 and a storage medium that stores the evaluation criteria DB 222 may be configured by different pieces of hardware.

The communication unit 230 includes, for example, a LAN unit, and transmits and receives a control program, various types of information, command signals, and the like to and from the programming PC 100 and the controller 300 via the network 900. The communication unit 230 can also transmit and receive data and command signals to and from other external devices. For example, the communication unit 230 can be used when an update module of the simulation program 221 is taken in from an external server.

The calculation unit 210 also has a role as a functional calculation unit that performs various calculations in accordance with the processing instructed by the trial management program executed by the trial management system. The calculation unit 210 may function as a virtual execution unit 211, an update unit 212, a transfer unit 213, and a determination notification unit 214. The virtual execution unit 211 mainly causes the simulation program 221 to virtually execute a control program created by a control designer. The update unit 212 updates, based on the evaluation transmitted from the controller 300, the corresponding evaluation criterion among the evaluation criteria DB 222 stored in the storage unit 220. When the virtual execution unit 211 causes a control program to be virtually executed and determines that the result satisfies the evaluation criterion (is appropriate), the transfer unit 213 transfers the control program to the controller 300. When the virtual execution unit 211 causes a control program to be virtually executed and determines that the result does not satisfy the evaluation criterion (is inappropriate), the determination notification unit 214 notifies the programming PC 100 of the result and information accompanying the evaluation criterion determined to be inappropriate, if any.

FIG. 3 is a hardware configuration diagram of the controller 300. The controller 300 is configured mainly by a calculation unit 310, a storage unit 320, a communication unit 330, and an input/output interface 340. The calculation unit 310 is a processor (CPU) that performs control of the controller 300 and execution processing of programs. The processor may have a configuration to cooperate with an arithmetic processing chip such as an ASIC, a GPU, and the like. The calculation unit 310 can execute the control program transmitted from the transfer unit 213 of the simulation server 200.

The storage unit 320 is a non-volatile storage medium and is configured by a hard disk drive (HDD), for example. The storage unit 320 stores an execution history DB 321. The execution history DB is a database that receives from the control device 400 history information indicating how the control device 400 has executed the control program when the control program is executed and stores the history information. The storage unit 320 may further store various parameter values, functions, display element data, lookup tables, and the like used for control and calculation. The storage unit 320 may be configured by a plurality of pieces of hardware, and for example, the execution history DB 321 may be constructed for each control target device and the storage medium may store them in different pieces of hardware.

The communication unit 330 includes, for example, a LAN unit, and transmits and receives a control program, various types of information, command signals, and the like to and from the programming PC 100 and the simulation server 200 via the network 900. The communication unit 330 can also transmit and receive data and command signals to and from other external devices. The input/output interface (I/F) 340 includes an EtherCAT port, for example, connected to the control device 400, and transmits a command signal from the control program to the control device 400 and receives a sensor signal and an operation history signal from the control device 400.

The calculation unit 310 also has a role as a functional calculation unit that performs various calculations in accordance with the processing instructed by the trial management program executed by the trial management system. The calculation unit 310 may function as a step execution unit 311, a presentation unit 312, and a reception unit 313. The step execution unit 311 executes the control program for each step preset and causes the control device 400 to actually operate. The presentation unit 312 generates a time chart representing an operation progress in each step in which the control device 400 operates and presents the time chart to the on-site worker. Specifically, the time chart is displayed on the display panel 380 connected to the controller 300. The reception unit 313 receives an evaluation or the like of the time chart by the on-site worker. Specifically, the reception unit 313 receives the evaluation and information related to the evaluation input by the on-site worker by using the input device 390 connected to the controller 300, such as a touch panel or a keyboard.

The program development to date in factory automation (FA) has the following problems. That is, when a control program created by a control designer is executed by a controller to cause a control device to actually operate, upon finding a malfunction, the on-site worker reports the state to the control designer, and the control designer redesigns the control program in response to the report. Exchanges between the control designer and the on-site worker are made several times, and this becomes one reason that makes the development period longer. There is a possibility that the control program can quickly be modified and updated, when the on-site worker can directly understand the source code of the control program, but few on-site workers have that skill. On the other hand, few control designers are familiar with know-how on, for example, adjustment between control devices at a manufacturing line site. With such circumstances overlapping at the same time, the development period of the control program becomes longer.

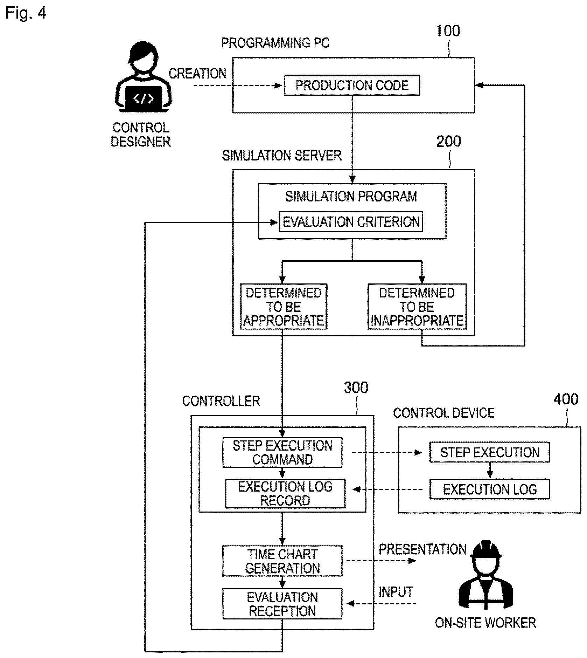

The trial management system according to the present embodiment aims to shorten the development period in response to the above problems in the program development. A specific processing flow of the trial management system will be described. FIG. 4 is a conceptual diagram illustrating a flow of processing of the trial management system.

The control designer uses the programming PC 100 to create production code for controlling the control device 400 by the controller 300. The production code is a control program in a trial stage. The created production code is transmitted to the simulation server 200, and the virtual execution unit 211 of the simulation server 200 causes the simulation program to virtually execute the transmitted production code PC. Specifically, the production code is executed by using a simulation model as an operation target, the simulation model in which the control device 400 is virtually reproduced by the simulation program 221. The virtual execution unit 211 acquires the operation result of the simulation model and determines whether or not the operation result satisfies the target evaluation criterion described in the evaluation criteria DB 222. When the virtual execution unit 211 determines that the evaluation criterion is not satisfied, the determination notification unit 214 transmits the determination result to the programming PC 100. The control designer can check the determination result via the programming PC 100.

When the virtual execution unit 211 determines that the evaluation criterion is satisfied, the transfer unit 213 transfers the production code to the controller 300. At this time, the determination notification unit 214 may transmit to the programming PC 100 information indicating that the production code has been transferred to the controller 300.

When the controller 300 receives the production code, the step execution unit 311 of the controller 300 executes the production code for each step preset, and causes the control device 400, being the control target of the controller 300, to actually operate. That is, the control signal, generated by the step execution unit 311 by executing the production code for each step, is actually transmitted to the control device 400 via the input/output interface 340, and the control device 400 actually operates in accordance with the control signal. For example, when the control signal is for causing the conveyor 430 to operate, the control box 431 causes the conveyor 430 to operate in accordance with the control content indicated by the control signal.

The control device 400 actually operating in accordance with the control signal, the control device 400 collects operation history signals that enable to track operation states of the operation target and returns the collected operation history signals to the controller 300 as an execution log. The operation states include a rotation instruction signal given to the operation target such as a motor, an output signal of an encoder mounted on an output unit of the motor, and the like. The step execution unit 311 records the execution log received from the control device 400 in the execution history DB 321. The step execution unit 311 repeats commanding the step execution and recording the execution log until all the steps described in the production code are completed or until the on-site worker instructs the completion.

When the execution of the production code by the step execution unit 311 is completed, the presentation unit 312 of the controller 300 generates a time chart representing the operation progress of each step and displays the time chart on the display panel 380. The on-site worker can check the operation state of the operation target at a target step by visually checking the time chart. At this time, the reception unit 313 receives an evaluation of the time chart by the on-site worker. The evaluation may include, for example, changing a criterion to be satisfied with respect to an operation timing between two signals, or changing a criterion to be satisfied with respect to a distance between elements, of which at least one is moving. The reception unit 313 can also receive from the on-site worker an input of relevant information such as a reason why the criterion should be changed. A specific presentation mode of the time chart and an input mode of evaluation and the like by the on-site worker will be described in detail below.

Upon receiving the evaluation of the specific step and the relevant information related to the evaluation from the on-site worker, the reception unit 313 transmits them to the update unit 212 of the simulation server 200. The update unit 212 updates, based on the received evaluation, the evaluation criterion related to the target operation described in the evaluation criteria DB 222. When the evaluation criterion is updated as described above, the operation result during the simulation that has been determined to be appropriate until that time by the virtual execution unit 211 may be determined to be inappropriate after the update. That is, the know-how of the site is incorporated into the evaluation criterion for determining the operation result during the simulation.

When the relevant information is recorded in association with the evaluation criteria DB 222 for the operation result newly determined to be inappropriate as described above, the determination notification unit 214 may read out the relevant information and transmit it to the programming PC 100. The control designer can know the reason why the control is determined inappropriate by checking such relevant information. That is, an opportunity to learn the know-how of the site is obtained, which can contribute to making the efficiency of the subsequent control program design higher. After the execution of the production code by the step execution unit 311 is completed, when the reception unit 313 does not particularly receive an evaluation of the time chart from the on-site worker, the production code can be a candidate for a control program to be executed by the controller 300.

Such a management system receives an input with the time chart to be easily recognized even by the on-site worker without specialized knowledge of the control program as an evaluation target, allowing quick and accurate feedback from the on-site worker to be easily obtained. Since such an evaluation fed back is not transferred to the control designer but is used to update the evaluation criterion to be used by the simulation program 221, the know-how of the site is accumulated in the system rather than the control designer. When the created control program has a malfunction, the control designer can know the malfunction from the execution result of the simulation program 221 and can thus reduce the number of trials and errors on the actual control device 400. That is, the development period of the control program can be shortened.

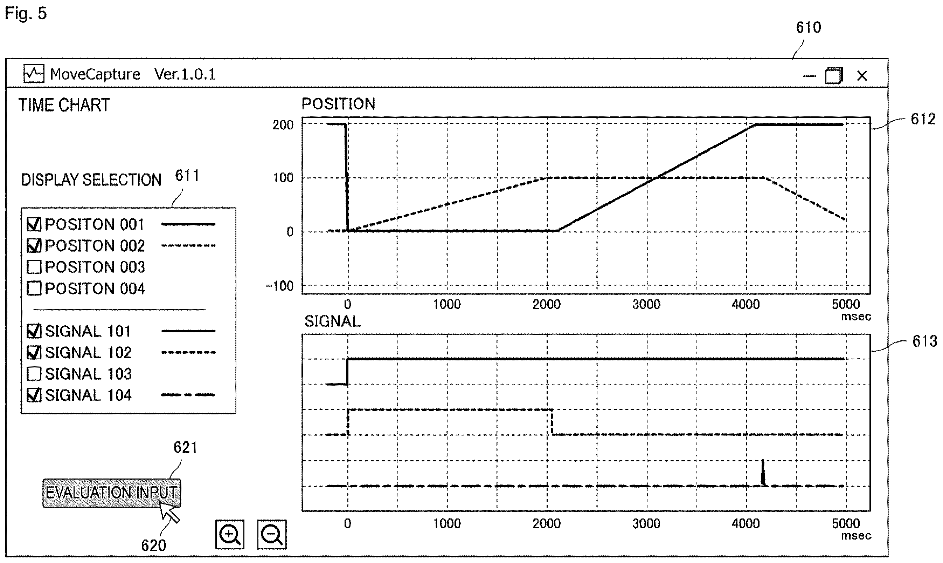

Next, a specific user interface related to the presentation unit 312 and the reception unit 313 will be described. FIG. 5 is an example of a display image of a time chart. Specifically, the time chart generated by the presentation unit 312 is set in a chart window 610 and displayed on the display panel 380.

When a time chart is displayed, together with a title of "time chart", the chart window 610 mainly includes a signal selection box 611, a position window 612, a signal window 613, and an evaluation input button 621. In the signal selection box 611, the signal names of the operation history signals recorded as the execution log for the designated step are listed with check boxes. The on-site worker moves a cursor 620 by using, for example, a mouse, which is an example of the input device 390, and puts a check mark in a check box of an operation history signal to be displayed. With the operation history signal that is put with the check mark, a solid line or a broken line representing the signal will appear next to the signal name, and the operation history signal appears in the position window 612 or the signal window 613 with the line type.

Here, the operation history signal is classified into a position signal (POSITION) that can take a numerical value within a certain range, such as a distance from a reference position, and a signaling signal (SIGNAL) that can take an ON/OFF Boolean value. When the selected operation history signal is a position signal, a time chart representing the operation progress is displayed in the position window 612, and when the selected operation history signal is a signaling signal, a time chart representing the operation progress is displayed in the signal window 613. In the position window 612, a horizontal axis represents the elapse of time, and a vertical axis represents a numerical value that can change within a certain range. In the signal window 613, the horizontal axis represents the elapse of time, and the vertical axis represents two values of ON and OFF for each displayed signal. The horizontal axis of the position window 612 in upper side and the horizontal axis of the signal window 613 in lower side are adjusted such that the elapse of time coincides with each other.

The on-site worker checks the display image on which such time charts are displayed. When a portion where the mutual relationship may cause a malfunction as the manufacturing process is found in comparing two or more operation history signals, an evaluation that the mutual relationship is "inappropriate" is input. The on-site worker clicks the evaluation input button 621 when inputting the evaluation.

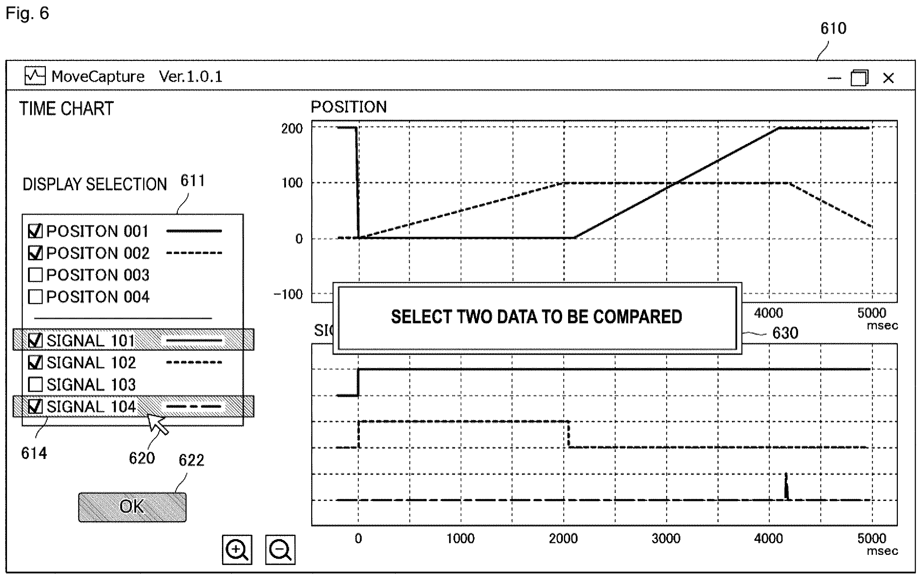

FIG. 6 is a display image to be transitioned when the evaluation input button 621 is clicked in FIG. 5 and is an example of a designation image for designating an operation history signal (target data) to be evaluated. On the designation image, superimposed is a notification window 630 for prompting the on-site worker to select two pieces of target data to be compared, and the operation history signals displayed in the signal selection box 611 become a selectable state. The on-site worker selects two operation history signals. A selection marker 614 is superimposed on the signal name of the selected operation history signal. When the selection is completed, the on-site worker clicks an OK button 622.

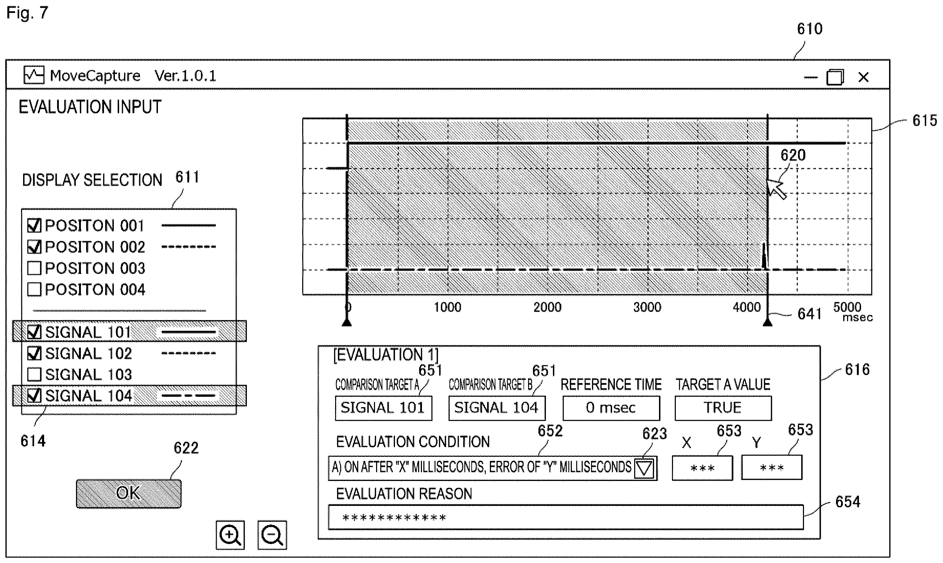

FIG. 7 is a display image to be transitioned when the OK button 622 is clicked in FIG. 6 and is an example of an evaluation input image to which the on-site worker inputs an evaluation. In particular, there is illustrated an example of an evaluation input image when two signaling signals that each can take on an ON/OFF Boolean value ("SIGNAL 101" and "SIGNAL 104" in the example of the figure) are selected.

The chart window 610 indicating the evaluation input image mainly includes, together with a title of "evaluation input", a signal selection box 611, a comparison window 615, an evaluation window 616, and an OK button 621. The signal selection box 611 keeps a state that the selection marker 614 is superimposed on the signal name of the selected operation history signal.

In the comparison window 615, the time charts of the two selected signaling signals are displayed side by side in a vertical direction. The same as the signal window 613 in FIG. 5, the horizontal axis represents the elapse of time, and the vertical axis represents two values of ON and OFF for each signal to be displayed. Two left and right range indicators 641 of vertical lines are superimposed on the comparison window 615, and the on-site worker can set a time range to be compared by dragging the range indicators 641 in a left or right direction. As the set time range, a shaded area, for example, is displayed between the two range indicators 641 as illustrated in the figure. By setting the time range as described above, the on-site worker can check the time of an event such as a signal rise, for example, and can designate an event that has occurred within the time range as a target of the evaluation condition.

Contents displayed in the evaluation window 616 differ depending on the selected operation history signal. In the example illustrated in FIG. 7, since two signaling signals are selected, items and conditions that can be evaluated for the two signaling signals are displayed. Specifically, the evaluation window 616 mainly includes signal designation boxes 651 for designating a reference signal ("comparison target A") and a signal to be compared ("comparison target B") of the two selected operation history signals, an evaluation condition box 652 for designating an evaluation condition, numerical value designation boxes 653 for designating numerical values of the designated evaluation condition, and an evaluation reason box 654 for inputting an evaluation reason in text.

The evaluation condition box 652 includes a pull-down button 623, and the on-site worker can cause selection candidates to be displayed by clicking the pull-down button 623. The selection candidates are configured by a list of sentences expressing how the time chart of the signal of the comparison target B needs to be deformed to be evaluated as "appropriate", with respect to the signal of the comparison target A serving as the reference displayed in the comparison window 615. For example, four selection candidates are prepared, namely, "A) ON after "X" milliseconds and error of "Y" milliseconds", "B) OFF after "X" milliseconds and error of "Y" milliseconds", "C) ON before "X" milliseconds and error of "Y" milliseconds", and "D) OFF before "X" milliseconds and error of "Y" milliseconds". The on-site worker selects one of these in accordance with the content to be evaluated. The on-site worker can designate quantitative numerical values for "X" and "Y" included in the selection candidates, in the numerical value designation box 653 corresponding thereto.

For example, when "A) ON after "X" milliseconds and an error of "Y" milliseconds" is selected in the evaluation condition box 652 and "X = 4000" and "Y = 100" are designated in the numerical value designation boxes 653, it is evaluated that the target signaling signal (SIGNAL 104 in the example of the figure) should be changed to "ON" after "4000" milliseconds within a range of an error of "100" milliseconds (a range from after 3950 milliseconds to after 4050 milliseconds) from the occurrence of the event ("from OFF to ON" or "from ON to OFF") of the reference signaling signal (SIGNAL 101 in the example of the figure). In the comparison window 615, the signaling signal of the target SIGNAL 104 changes to ON approximately 4300 milliseconds after the signaling signal of the reference SIGNAL 101 changes from OFF to ON, and thus it is found that this does not conform to the newly made evaluation.

When desired to add an explanation of the reason for the evaluation, the on-site worker inputs the explanation in the evaluation reason box 654. For example, the site worker can input as "shorten the time until the operation start of the conveyor after the completion of mounting the chip C". In the example of the figure, the evaluation reason box 654 receives a text input, but may be configured to receive illustration drawing or photograph attachment.

The on-site worker can confirm the input content by clicking the OK button 622. The reception unit 313 receives the confirmed input content and transmits it to the update unit 212 of the simulation server 200. The update unit 212 updates the evaluation criterion used by the simulation program based on the received evaluation. For example, the evaluation criterion that has determined to be appropriate when "the signaling signal SIGNAL 104 changes to ON after <4300> milliseconds (error of <100> milliseconds) from the change of the signaling signal SIGNAL 101 from OFF to ON" is updated to "after <4000> milliseconds (error of <100> milliseconds)" according to the received evaluation. The updated evaluation criterion is recorded in the evaluation criteria DB 222. The explanation input to the evaluation reason box 654 is recorded in the evaluation criteria DB 222 as information accompanying the updated evaluation criterion.

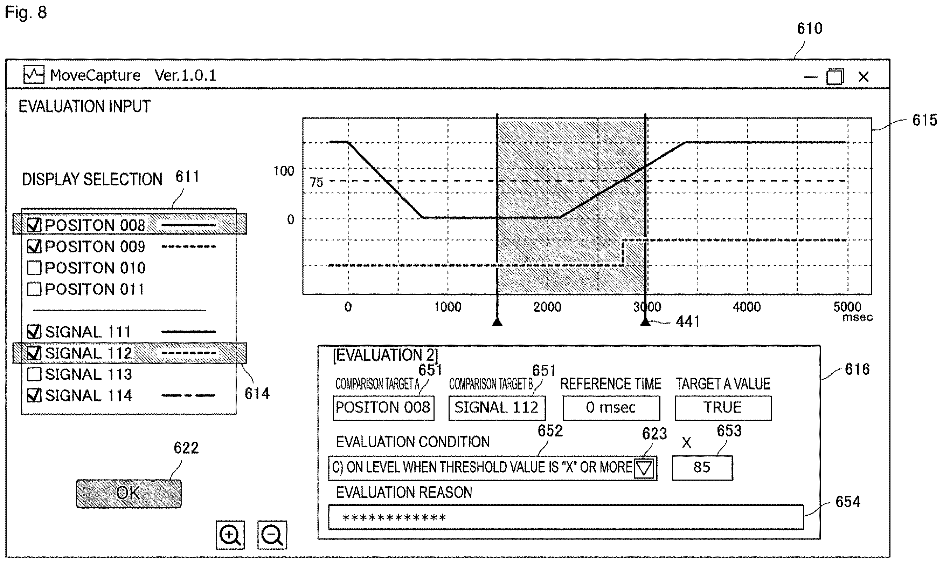

FIG. 8 is a display image to be transitioned when the OK button 622 is clicked in FIG. 6 and is another example of the evaluation input image to which the on-site worker inputs the evaluation. In particular, there is illustrated an example of the evaluation input image when a position signal that can take a numerical value within a certain range and a signaling signal that can take an ON/OFF Boolean value ("POSITION 008" and "SIGNAL 112" in the example of the figure) are selected. The chart window 610 illustrating the evaluation input image mainly includes, the same as in the example of FIG. 7, together with the title of "evaluation input", the signal selection box 611, the comparison window 615, the evaluation window 616, and the OK button 622. The signal selection box 611 keeps a state that the selection marker 614 is superimposed on the signal name of the selected operation history signal.

In the comparison window 615, the time charts of the two selected signals are displayed side by side in the vertical direction. Here, since the position signal and the signaling signal are selected, the numerical value for the position signal is displayed on the vertical axis. A level line indicating a threshold value (a level line of a numerical value "75" in the example of the figure) is also displayed in a superposed manner. For the signaling signal, the vertical axis represents two values of ON and OFF. For both signals, the horizontal axis represents the elapse of time in common. Two left and right range indicators 641 of vertical lines are superimposed on the comparison window 615, and the on-site worker can set a time range to be compared by dragging the range indicators 641 in a left or right direction. As the set time range, a shaded area, for example, is displayed between the two range indicators 641 as illustrated in the figure. By setting the time range as described above, the on-site worker can check the time at which the position signal intersects the level line and can designate an event occurring within the time range as the target of the evaluation condition, for example.

In the example illustrated in FIG. 8, since the position signal and the signaling signal are selected, the evaluation window 616 displays items and conditions that can be evaluated corresponding to the combination of these signals. Specifically, the evaluation window 616 mainly includes signal designation boxes 651 for designating a reference signal ("comparison target A") and a signal to be compared ("comparison target B") of the two selected operation history signals, an evaluation condition box 652 for designating an evaluation condition, a numerical value designation box 653 for designating a numerical value of the designated evaluation condition, and an evaluation reason box 654 for inputting an evaluation reason in text.

The evaluation condition box 652 includes a pull-down button 623, and the on-site worker can cause selection candidates to be displayed by clicking the pull-down button 623. The selection candidates are configured by a list of sentences expressing how the time chart of the signal of the comparison target B needs to be deformed to be evaluated as "appropriate", with respect to the signal of the comparison target A serving as the reference displayed in the comparison window 615. For example, six selection candidates are prepared, which are "A) ON edge when the threshold value is "X" or more", "B) OFF edge when the threshold value is "X" or less", "C) ON level when the threshold value is "X" or more", "D) OFF level when the threshold value is "X" or more", "E) ON level when the threshold value is "X" or less", and "F) OFF level when the threshold value is "X" or less". The on-site worker selects one of these in accordance with the content to be evaluated. The on-site worker can designate a quantitative numerical value for "X" included in the selection candidate with the numerical value designation box 653.

For example, when "C) ON level when the threshold value is "X" or more" is selected in the evaluation condition box 652 and "X = 85" is designated with the numerical value designation box 653, it is evaluated that the target signaling signal (SIGNAL 112 in the example of the figure) is "ON level" after the reference position signal (POSITION 008 in the example of the figure) crosses the numerical value "85". In the comparison window 615, the target signaling signal SIGNAL 112 is the ON level after the reference position signal POSITION 008 crosses the numerical value "75". This contradicts the newly made evaluation.

When desired to add an explanation of the reason for the evaluation, the on-site worker inputs the explanation in the evaluation reason box 654. For example, "to prevent interference between the mounted chip C and the arm tip" can be input. In the example of the figure, the evaluation reason box 654 receives a text input, but may be configured to receive illustration drawing or photograph attachment.

The on-site worker can confirm the input content by clicking the OK button 622. The reception unit 313 receives the confirmed input content and transmits it to the update unit 212 of the simulation server 200. The update unit 212 updates the evaluation criterion used by the simulation program based on the received evaluation. For example, the evaluation criterion, which has determined to be appropriate when "the SIGNAL 112 is <ON level> after the POSITION 008 crosses the numerical value <75>", is updated to "after crossing <85>" in accordance with the received evaluation. The updated evaluation criterion is recorded in the evaluation criteria DB 222. The explanation input to the evaluation reason box 654 is recorded in the evaluation criteria DB 222 as information accompanying the updated evaluation criterion.

The on-site worker repeats the work described with reference to FIG. 6 to FIG. 8 for the number of items to be evaluated. In the explanation of the above-described example, the selection candidates that can be selected in the evaluation box are limited to simple evaluation conditions, but in the matter of course, more complex evaluation conditions may be prepared. When the number of numerical value items to be input increases, the numerical value designation boxes may be arranged accordingly.

Instead of the format in which the selection candidate can be selected with the evaluation box, or in addition to the format in which the selection candidate can be selected with the evaluation box, a new evaluation may be designated by directly deforming the time chart displayed in the comparison window 615 with the cursor 620. For example, in the example of FIG. 8, a new evaluation may be designated by dragging and moving the line at which the SIGNAL 112 changes to the ON level to a position that coincides with the time point when the POSITION 008 crosses the numerical value <85>.

## Claims

1. A trial management system, comprising:
a virtual execution unit configured to cause a simulation program to virtually execute a control program created by a control designer;
a step execution unit configured to execute the control program for an individual step preset to cause a control device to actually operate when an execution result of the virtual execution unit satisfies a criterion preset;
a presentation unit configured to generate a time chart representing an operation progress in the individual step and present the time chart to an on-site worker;
a reception unit configured to receive an evaluation of the time chart by the on-site worker; and
an update unit configured to update, based on the evaluation received by the reception unit, the criterion.

2. The trial management system according to claim 1, wherein
the reception unit receives the evaluation as a deformation of the time chart, and
the update unit updates, based on the time chart deformed, a criterion for operation timing between elements to be sequentially executed.

3. The trial management system according to claim 1, wherein
the reception unit receives the evaluation as a deformation of the time chart, and
the update unit updates, based on the time chart deformed, a criterion for a distance between elements, at least one of which moves.

4. The trial management system according to claim 1, wherein
the reception unit receives information accompanying the evaluation, the update unit stores the information in a storage unit in association with the criterion to be updated, and
the virtual execution unit reads out the information from the storage unit and presents the information to the control designer when an execution result of the control program by the simulation program does not satisfy the criterion updated.

5. A trial management method, comprising:
a virtual execution process of causing a simulation program to virtually execute a control program created by a control designer;
a step execution process of executing the control program for an individual step preset to cause a control device to actually operate when an execution result in the virtual execution process satisfies a criterion preset;
a presentation process of generating a time chart representing an operation progress in the individual step and presenting the time chart to an on-site worker;
a reception process of receiving an evaluation of the time chart by the on-site worker; and
an update process of updating, based on the evaluation received in the reception process, the criterion.

6. A trial management program causing a computer to execute:
a virtual execution process of causing a simulation program to virtually execute a control program created by a control designer;
a step execution process of executing the control program for an individual step preset to cause a control device to actually operate when an execution result in the virtual execution process satisfies a criterion preset;
a presentation process of generating a time chart representing an operation progress in the individual step and presenting the time chart to an on-site worker;
a reception process of receiving an evaluation of the time chart by the on-site worker; and
an update process of updating, based on the evaluation received in the reception process, the criterion.
